# EUROPEAN PATENT APPLICATION

(11) **EP 4 141 330 A1**
(43) Date of publication of application: **01.03.2023**
(21) Application number: 22192186.9
(22) Date of filing: 25.08.2022
(51) Int. Cl.: F24D 3/10, F24D 3/12, E04B 5/48, F24D 3/14, F24D 19/00

(54) **CONNECTION UNIT, FLOOR STRUCTURE AND METHOD FOR INSTALLING A CONNECTION UNIT IN A FLOOR STRUCTURE**

(30) Priority: 25.08.2021 FI 20215890
(71) Applicant: Jakotec Oy, 44150 Äänekoski (FI)
(72) Inventor: Salmela, Sami, 44150 ÄÄNEKOSKI (FI)
(74) Representative: Kespat Oy

(57) **Abstract**

The invention relates to a connection unit (11) for joining circuit pipes conveying fluids, wherein the connection unit (11) includes a housing structure (14) with a base (28) and a plurality of sides (16), and a first hookup side (15) has first openings (18) for first circuit pipes (22), and wherein the connection unit (11) comprises support surfaces (30) between which a plane (T1) is formed, wherein the first hookup side (15) includes an inclined portion (34) covering at least a portion of the hookup side (15), which inclined portion (34) lies at an angle (K1) of 45 - 85 degrees, preferably 70 - 80 degrees, with respect to the plane (T1), at least one manifold (26), clamps (42) for supporting the manifold (26), and the housing structure (14) includes at least one second opening (38) for conducting a trunk line to the manifold (26). In addition, the manifold (26) includes a tubular body (46), a trunk hookup (48), and circuit hookups (58) for the first circuit pipes (22). The manifold (26) is fixed in the connection unit (11) by means of clamps (42) so as to be at an incline with respect to the plane (T1) so that the circuit hookups (58) point obliquely with respect to the plane (T1) towards the plane (T1). The invention also relates to a floor structure as well as a method for installing a connection unit in a floor structure.

## Description

The invention relates to a connection unit for joining circuit pipes conveying liquids, the connection unit including
- a housing structure with a base and a plurality of sides, and at least one side, namely a first hookup side, has first openings for first circuit pipes, and wherein the connection unit comprises support surfaces between which a plane is formed, wherein the first hookup side includes an inclined portion covering at least a portion of the hookup side, which inclined portion lies at an angle of 45 - 85 degrees, preferably 70 - 80 degrees, with respect to the plane, wherein the first openings are formed in the inclined portion,
- at least one manifold for distributing a flow of liquid to the first circuit pipes,
- clamps for supporting the manifold inside the housing structure,
and the housing structure further includes at least one second opening for conducting a trunk line to the manifold.

The invention also relates to a floor structure and a method for installing a connection unit in a floor structure.

A connection unit is a technical space in a habitation, which technical space can contain, for example, equipment required by a heating system, a cooling system or a utility-water distribution system dedicated to the habitation. For example, district-heat lines entering the habitation can be joined in a connection unit to floor-heating loops for specific rooms. Especially in high-rise and terraced buildings, the space taken up by a connection unit dedicated to a habitation is minimized in order to maximize living space. To this end, the connection unit can be embedded in a floor of the habitation, mounted on a wall of the habitation or fixed to a ceiling of the habitation. A connection unit can also denote any other structure surrounding hookups for pipes conveying a liquid medium.

Connection units for installation in a floor of the habitation which are embedded in the floor structure are known in the prior art. It is necessary in this case to create a cavity for the connection unit in an insulation of the floor structure and potentially also in a load-bearing structure. Furthermore, it is necessary to seal the connection unit after installation so that liquid from the floor cast or some other liquid does not get into the insulation and the load-bearing structure.

Nowadays, one aims to make the floor cast as thin as possible in order to save costs. A typical floor casting thickness is 40-45 mm. Floor-heating pipes must be covered by a sufficient, at least 12 mm thick, cast layer. Installing floor-heating pipes too close to the surface of the cast floor is a typical construction error, which can result, for example, due to floor-heating pipes which branch off horizontally from the connection unit buoying up during casting.

Connection units that can be mounted on a wall of a habitation are also known in the prior art. The installation of floor-heating pipes in floor structures from a connection unit on a wall requires the implementation of bending angles at the border between the wall and the floor, which is a tedious and time-consuming operation.

The patent publication KR 100851937 B1 is known in the prior art, which discloses a connection unit in which a hookup side comprises an inclined portion. The patent publications KR 20160027510 A and CN 209495384 U disclose conventional connection units without an inclined portion of the hookup side for splitting trunk lines into room-specific heating loops. In addition, DE 3203964 A1, EP 2894416 A1 and KR 20060031745 A disclose connection units according to the prior art for joining circuit pipes which convey liquids.

The object of the invention is to provide an improved connection unit which facilitates, expedites and streamlines construction and reduces the number of construction errors. The characteristic features of this invention are indicated in the attached patent claim 1. A further object of the invention is to provide an improved floor structure which facilitates, expedites and streamlines construction and reduces the number of construction errors. The characteristic features of this invention are indicated in the attached patent claim 11. A further object of the invention is to provide an improved method for installing a connection unit in a floor structure which facilitates, expedites and streamlines construction and reduces the number of construction errors. The characteristic features of this invention are indicated in the attached patent claim 14.

A connection unit according to the invention for joining circuit pipes conveying liquids includes a housing structure with a base and a plurality of sides, and at least one side, namely a first hookup side, has first openings for first circuit pipes, and wherein the connection unit comprises support surfaces between which a plane is formed. An inclined portion comprising at least the first openings on the first hookup side lies at an angle of 45 - 85 degrees, preferably 70 - 80 degrees, with respect to the plane in order to conduct the first circuit pipes at a desired angle. In addition, the connection unit includes at least one manifold for distributing a flow of liquid to the first circuit pipes, as well as clamps for supporting the manifold inside the housing structure. The housing structure further includes at least one second opening for conducting a trunk line to the manifold. The manifold includes a tubular body, a trunk hookup formed in the end of the body, and circuit hookups formed perpendicularly to the longitudinal direction of the body for the first circuit pipes. The manifold is configured so as to be attachable by its trunk hookup to a trunk line, wherein the manifold is fixed in the connection unit by means of clamps so as to be at an incline with respect to the plane so that the circuit hookups point obliquely with respect to the plane towards the plane in order to press said first circuit pipes to be joined to the manifold against the insulation in the cast.

Surprisingly, it has been observed that, even when the first circuit pipes to be joined to the connection unit are installed in the horizontal parallel to the floor in accordance with the prior art, plastic circuit pipes tend to rise to the surface in the cast. The solution according to the invention is based on the new and surprising observation that the circuit pipes should be oriented from the manifolds and the connection unit towards the insulation, whereby the circuit pipes are prevented from rising to the surface of the cast.

The connection unit according to the invention can be installed in a floor, wall or ceiling of a habitation. Regardless of the orientation of the fixation surface, the connection unit according to the invention allows the first circuit pipes to be guided from the manifolds and the connection unit at a desired angle towards the fixation surface. A connection unit according to the invention installed in a floor thus allows the first circuit pipes to be directed towards the surface of the insulation, which facilitates the installation of the connection unit in a thin floor cast and prevents the first circuit pipes from rising upwards towards the surface of the floor cast. Through the use of a connection unit according to the invention, the thickness of the floor cast can also be minimized. A connection unit according to the invention installed in a wall allows the first circuit pipes to be positioned at a desired angle so that it is not necessary to break a plasterboard. Analogously, a connection unit according to the invention installed in a ceiling allows the first circuit pipes to run parallel to the ceiling more easily compared to a connection unit according to the prior art. In a connection unit according to the invention, it is possible to use a standard manifold with a tubular body from which circuit hookups for the circuit pipes branch off perpendicularly in relation to the tubular body. The use of the connection unit thus has the advantage that the manifold does not have to be specially manufactured.

The connection unit according to the invention is suitable for use in particular in structures of high-rise buildings and terraced houses. The connection unit according to the invention can be used for the installation of any type of pipes, wherein any liquid medium such as heating or cooling fluid or utility water circulates in the pipes to be joined.

Preferably, the connection unit includes at least two manifolds, namely a supply manifold for distributing a flow to the first circuit pipes and a return manifold for collecting a flow of the first circuit pipes returning from the circuit. The housing structure can further include at least two second openings for conducting lines to the manifolds. Preferably, the second openings in the connection unit are configured to conduct a supply trunk line to the supply manifold and a return trunk line to the return manifold, and each manifold includes a tubular body, a trunk hookup formed in the end of the body, and circuit hookups formed perpendicularly to the longitudinal direction of the body for the first circuit pipes, wherein the supply manifold is configured to be attachable by its trunk hookup to the supply trunk line and the return manifold is configured to be attachable by its trunk hookup to the return trunk line, wherein the manifolds are fixed in the connection unit by means of clamps so as to be at an incline with respect to the plane so that the circuit hookups point obliquely with respect to the plane towards the plane in order to press said first circuit pipes to be joined to the manifolds against the insulation in the cast. It is thereby possible to collect liquid returning from the circuit in the same connection unit in order to return the liquid to the return trunk line.

The diameter of the first circuit pipes is preferably smaller than the diameter of the supply trunk line and return trunk line. The required water can consequently be brought to the manifold and/or taken from the manifold to a trunk line via a single trunk hookup, which reduces the number of ports.

A second opening is preferably on a side adjacent to the first hookup side. This permits the use of a standard manifold in which the trunk hookup and the supply or return line connected thereto are perpendicular to the circuit pipes which branch off from the manifold.

The base is preferably a solid and unbroken structure which forms a fixation surface for the bonding of the connection unit to the insulation. A large contact surface area with the insulation is thereby provided for bonding, and the connection unit lies tightly on top of the insulation. Bonding can help to reduce the carrying of the sound of footsteps between residential floors via the connection units. Moreover, bonding can be carried out quickly.

The connection unit preferably has circular first openings for conducting the first circuit pipes perpendicularly to the inclined portion of the first hookup side. The angle of the inclined portion in relation to the plane thus determines the direction in which the first circuit tubes point.

The angle between the first circuit pipes and the inclined portion of the first hookup side can also deviate from the perpendicular. Pliable seals can be used in the first openings, whereby the angle can deviate from the perpendicular. It is thereby possible to adjust the angle of rotation of the first circuit pipes in relation to the plane formed between the support surfaces during installation by rotating the manifold in its clamps. The pliable seals consequently allow the angle of rotation to be optimized during installation so that the first circuit pipes do not rise from the upper surface of the insulation to the surface of the cast. It is thus possible to provide an angle of rotation of the first circuit pipes with respect to the plane formed between the support surfaces through the combined effect of the inclined portion of the connection unit and the pliable seals.

Preferably, each manifold comprises, on the opposite side of the body in relation to the circuit hookups, valve seats for actuators or second branch hookups for second circuit pipes.

According to an embodiment, at least one side, namely a second hookup side, preferably the side opposite the first hookup side, contains third openings for second circuit pipes, which third openings are further away from the plane than the first openings. This makes it possible to introduce second circuit pipes into the connection unit so that these can be joined to the first circuit pipes in such a manner that any need for bending the second circuit pipes remains minimal, even when the manifold is arranged at an incline with respect to its circuit hookups in order to point the first circuit pipes towards the insulation.

In an embodiment of a connection unit according to the invention, the base forms a support surface. The structure of the connection unit is thus low, whereby it is possible to arrange the connection unit in a habitation in such a manner that it limits the living space as little as possible.

In an embodiment of the connection unit according to the invention, the angle between the base and the first hookup side is 90 degrees and the connection unit includes separate support means for arranging the inclined portion at a desired angle in relation to the plane. It is thus possible to provide a connection unit with a simple polyhedral shape while the orientation of the first circuit pipes can be achieved by means of the support means.

The first hookup side preferably comprises a bevel edge. This makes it possible to reduce a volume of the connection unit.

The connection unit preferably comprises adjustable brackets for the fixed installation of the connection unit. This facilitates a mounting of the connection unit in a desired location.

The base and sides of the housing structure preferably form a watertight trough in which a water leakage conduit is arranged above the floor surface. Any liquid leaking into the connection unit can thus be conducted to an observable place where the leak can be detected by a person.

Port seals are preferably employed in the first openings, whereby the housing structure is rendered watertight at the site of the first openings. Port seals are preferably also employed in the second and third openings. It is alternatively possible to use a strip-type seal on the first hookup side, wherein all pipe ports are arranged one over the other or side by side without separate seals. Analogously, it is also possible to use a strip-type seal in the second and third openings. The strip-type seal can also comprise reinforcements so that only one opening is created on the first and/or second hookup side of the blank of the connection unit, in which opening the strip-type seal is arranged as a separate element. The strip-type seal contains sealed openings for individual pipes. In an embodiment of the connection unit according to the invention, the angle between the base and the first hookup side is 90 degrees and a strip-type seal arranged as a separate element in the blank of the connection unit acts as the inclined portion.

The clamps are preferably fixed to the base of the housing structure. The clamps thereby support the manifolds in a direction opposite to the force of gravity and the fixation of the clamps is simple.

The connection unit is preferably 80 - 150 mm thick. The connection unit is thus high enough so that components to be arranged inside the connection unit, such as a manifold and circuit pipes, easily fit inside the same.

A floor structure according to the invention comprises a load-bearing structure, an insulation installed on top of the load-bearing structure, a floor cast realized on top of the insulation with first circuit pipes cast therein, the first circuit pipes including ends for hookups, a connection unit for joining the first circuit pipes to a manifold for the conveyance of a liquid, wherein the ends of the first circuit pipes are conducted into the connection unit. A connection unit of any of the embodiments described in the foregoing is arranged on top of the insulation in the floor structure and is of a height such that it protrudes at least partly above the cast floor structure.

This saves working time during the construction of the floor, as the insulation does not have to be modified prior to the installation of the connection unit. A connection unit according to the invention nevertheless allows a structure to be provided that does not take up much space, and the connection unit can be arranged, for example, in the plinth of a cabinet, whereby the connection unit does not take up any living space at all in practice. When the connection unit is embedded in the insulation in accordance with the prior art, the space between the connection unit and the insulation must be sealed before the floor is cast. With a connection unit according to the invention, this step can also be omitted. Sound insulation also improves when the insulation is kept intact.

In this context, insulation denotes a material with a thermal conductivity of less than 0.5 W/m°C. The load-bearing structure can be a hollow-core slab.

The connection unit is preferably arranged on top of an unbroken insulation. In other words, no opening is formed in the insulation for the connection unit and the fixation of the connection unit in the floor structure does not run entirely through the insulation. The structure is thus first class in terms of sound and thermal insulation.

The floor structure preferably includes an adhesive or self-adhesive bond or a fixation stud between the insulation and the connection unit in order to improve the sound insulation for steps. In other words, the connection unit can be fixed on top of a fully intact insulation and load-bearing structure without modification by gluing or by a self-adhesive fixation or by a fixation stud. It is also possible for a known adhesive or self-adhesive bond that can comprise a property that improves sound insulation to be employed for the fixation. This saves working time and better preserves the watertightness of the floor structure. With bonding, fixation is quick and a sound insulation with respect to steps is first class, as the insulation is not penetrated by any structure, not even by fixation bolts. A fixation stud here denotes any stud or hook in accordance with the prior art that is pressed into the insulation in such a manner that the fixation stud does not pass through the insulation. For example, if the insulation is 30-35 mm thick, the fixation stud can extend to a depth of, for example, 20 mm, whereby the fixation is sturdy enough while the insulation is kept intact, which improves the sound insulation.

The connection unit can also be fixed by means of adjustable brackets which are bolted to the load-bearing structure through the insulation. This allows the connection unit to be installed in a permanent manner in a desired location.

The floor cast can be 20 - 60 mm thick. A thin floor cast saves construction material and thus construction costs.

The connection unit is preferably arranged in a plinth of a cabinet. The connection unit thus does not limit the living space of the habitation.

In a method according to the invention for installing a connection unit in a floor structure, a housing structure with a base and a plurality of sides is formed in the connection unit, and on at least one side, namely on a first hookup side, first openings for first circuit pipes are formed, and support surfaces are formed in the connection unit between which a plane is formed, wherein the first hookup side includes an inclined portion covering at least a portion of the hookup side, which inclined portion lies at an angle of 45 - 85 degrees, preferably 70 - 80 degrees, with respect to said plane, in which inclined portion the first openings are formed, at least one manifold for distributing a flow of liquid to the first circuit pipes, clamps for supporting the manifold inside the housing structure, and at least one second opening is further formed in the housing structure for conducting a trunk line to the manifold, and in which method the connection unit is installed on top of a load-bearing structure prior to the casting of the floor, the connection unit is fixed to the load-bearing structure, the first circuit pipes are conducted so as to lie on top of the insulation, a 20-60 mm thick floor cast is cast on top of the insulation, whereby the first circuit pipes remain in the floor cast, and the first circuit pipes are joined to the manifold for the conveyance of a liquid. In the method, a tubular body is formed in the manifold, a trunk hookup is formed in an end of the body, and, perpendicularly to the longitudinal direction of the body, circuit hookups are formed for the first circuit pipes, and the manifold is joined by its trunk hookup to the trunk line, wherein the manifolds are fixed in the connection unit by means of clamps so as to be at an incline with respect to the plane so that the circuit hookups point obliquely with respect to the plane towards the plane in order to press the first circuit pipes to be joined to the manifolds against the insulation in the cast, and the connection unit is installed on top of the insulation, preferably without modifying the insulation or load-bearing structure, and the first circuit pipes are oriented in the floor cast against the insulation by means of the manifold.

This saves working time during the construction of the floor and makes it easier to render the floor structure watertight.

Sound insulation also improves when the insulation is kept intact.

Fixation of the connection unit to the load-bearing structure here can mean that the connection unit is fixed to the insulation and to the load-bearing structure through the insulation or that the connection unit is only fixed to the insulation installed on top of the load-bearing structure.

The connection unit is preferably fixed directly to the insulation by gluing or by self-adhesive means or by fixation studs without breaking the insulation in order to improve the sound insulation with respect to steps. Gluing or a self-adhesive fixation or a fixation stud are also realized quickly and do not create a cold bridge through the insulation like a bolt that passes through the insulation. In other words, the fixation of the connection unit does not run all the way through the insulation, whereby a layer that is entirely intact remains in the insulation, which improves the sound and thermal insulation.

Alternatively, the connection unit can be fixed to the load-bearing structure with bolts so that the bolts pass through the insulation. In the method according to the invention, however, it is not necessary to create an opening in the insulation for embedding the connection unit in the same, but rather the base of the connection unit can be left on top of the insulation.

The invention is illustrated in the following in detail with reference to the attached drawings illustrating embodiments of the invention, wherein
- Figure 1: shows an axonometric view of an embodiment of a connection unit according to the invention,
- Figure 2: schematically shows an embodiment of a connection unit according to the invention,
- Figures 3a and 3b: show embodiments of a connection unit according to the invention in a side view,
- Figures 4a-4d: schematically show embodiments of a connection unit according to the invention,
- Figure 5: shows a usage of a connection unit in a top view,
- Figure 6: shows a floor structure according to the invention.

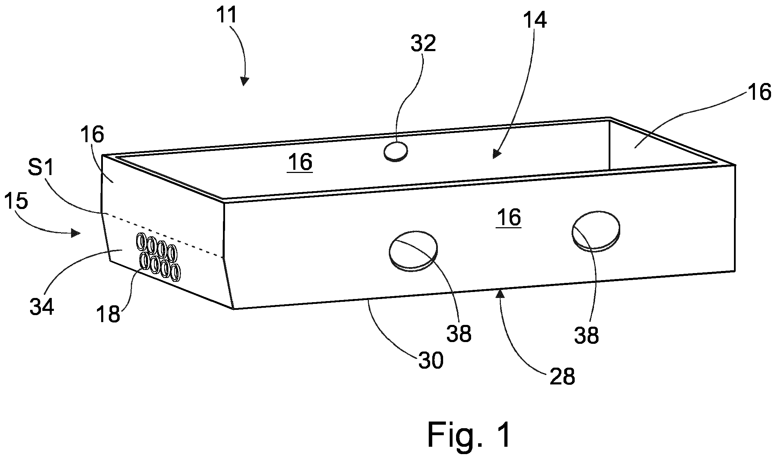

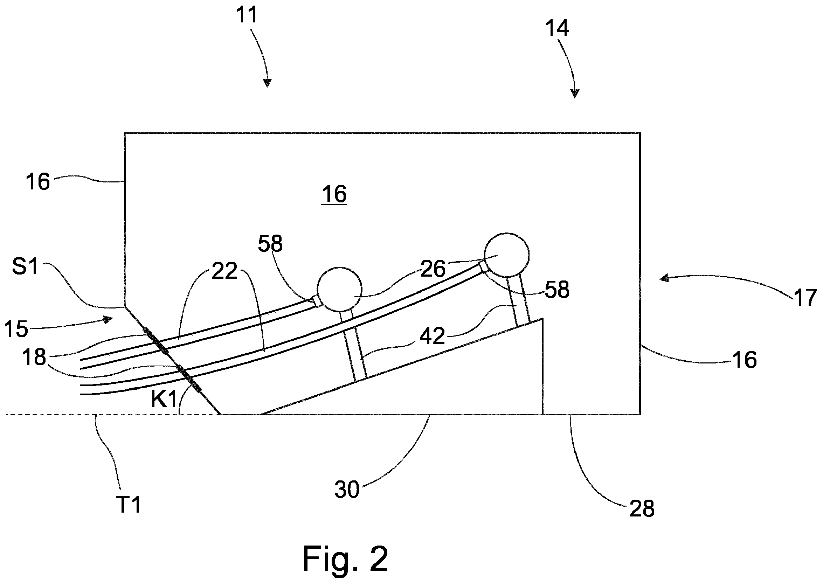

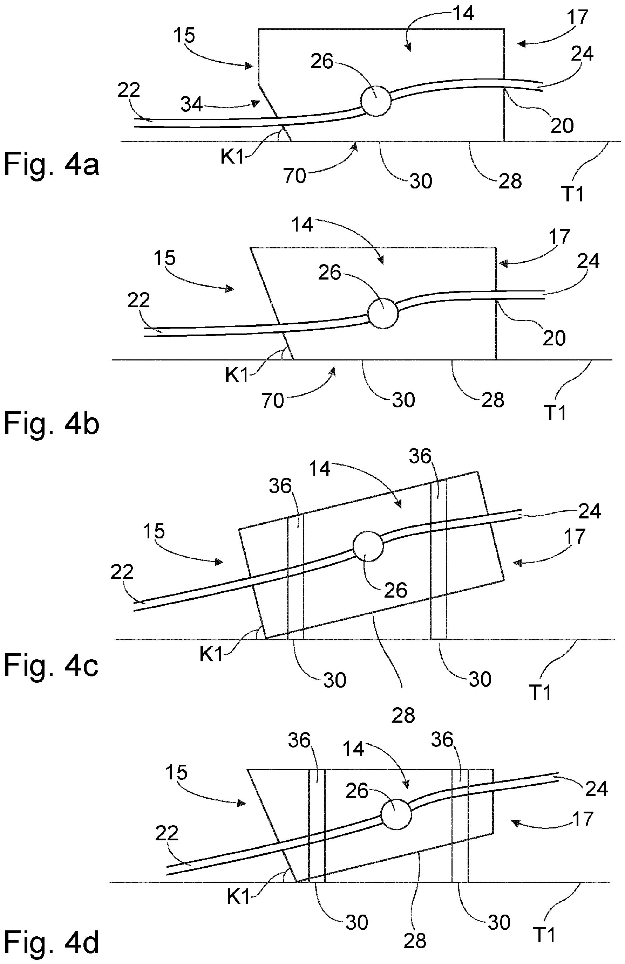

Figures 1 and 2 show a connection unit 11 according to the invention. The base 28 and sides 16 of the connection unit 11 form a watertight housing structure 14. The connection unit 11 is preferably used to connect first circuit pipes 22 to a manifold 26 but can also be used to join second circuit pipes 24 via the manifold 26 to the first circuit pipes 22 inside the watertight housing structure 14, as illustrated in Figures 4a - 4d. Any liquid leaking from any of the joints between the first circuit pipes 22, the manifold 26 and potential second circuit pipes 24 thus flows in a controlled manner into the housing structure 14 of the connection unit 11. The connection unit 11 can contain an electronic leak detector, or a side of the connection unit 11 can comprise a water leakage conduit 32, which can be arranged above the floor surface and from which water leakage is conducted to an observable place where it can be detected by a person.

In the embodiment shown in Figures 1 and 2, the base 28 of the connection unit 11 forms a support surface 30, which defines a plane T1. In the connection unit 11 according to the invention, the inclined portion 34 comprising first openings 18 of a first hookup side 15 lies at an angle K1 of 45 - 85 degrees, preferably 70 - 80 degrees, with respect to the plane T1. In this embodiment, the inclined portion 34 denotes the portion of the first hookup side 15 between the base 28 and the bevel edge S1 of the connection unit 11. The first circuit pipes 22 are conducted perpendicularly with respect to the inclined portion 34 into the connection unit 11 via the first sealed openings 18. If second circuit pipes 24 are used in the connection unit 11, they are conducted into the connection unit 11 via sealed third openings 20 in a second hookup side 17, as illustrated in Figures 4a - 4d. The site of the third openings 20 is further away from the plane T1 than the site of the first openings 18 so that the circuit water pipes can be conducted to the manifold 26 at a slight angle without bending the pipes sharply. Trunk lines running to the manifolds 26 can be conducted via second openings 38 illustrated in Figure 1. The second openings 38 are preferably arranged on a side 16 adjacent to the first hookup side 15 so that the ends of the trunk lines can be run to the manifolds 26.

In the embodiment shown in Figure 2, one connection unit 11 comprises two manifolds 26. The connection unit 11 according to the invention can also be provided with only one manifold 26. It is thus possible, for example, to realize a floor structure with two connection units 11 on opposite sides of a room, wherein the first connection unit 11 distributes liquid from a supply trunk line 40 via a supply manifold 26.1 to the first circuit pipes 22, while liquid returning from the circuit is collected via a return manifold 26.2 into a return trunk line 44 in the second connection unit 11.

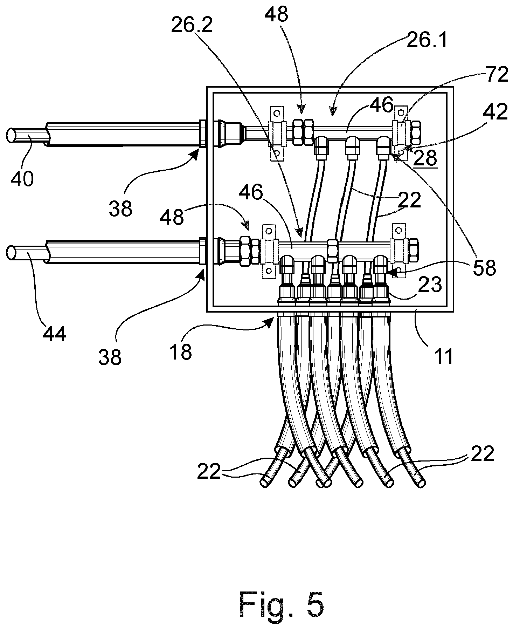

The connection unit 11, the floor structure and the method according to the invention preferably use so-called standard manifolds 26, which are not specifically designed for use with a bevelled connection unit 11. A standard manifold 26 denotes manifolds 26 with a tubular body 46 as illustrated in Figure 5, which are supplied with water from a trunk line via an end supply, i.e. via a trunk hookup 48 formed in the end of the body 46. A trunk line can denote a supply trunk line 40 and a return trunk line 44 which are larger in diameter than the first circuit pipes 22 and second circuit pipes 24 and which bring heated water into a circuit and take water cooled in the circuit back to a heat exchanger to be heated. Each manifold 26 preferably includes circuit hookups 58 formed in the body 46 for first circuit pipes 22 and arranged transversely to the longitudinal direction of the body 46. Such a standard manifold 26 allows the orientation of the circuit hookups 58 and, thereby, of the first circuit pipes 22 branching off from the manifold 26 to be altered by simply rotating the manifold 26 about the longitudinal axis of its body 46 so that the circuit hookups 58 point towards the plane T1. This also guides the first circuit pipes 22 towards the plane T1 and later, outside the connection unit 11, against the insulation 52, thus ensuring the positioning of the circuit pipes inside the cast. In order to enable the orientation of the manifolds 26 by rotation while using the same clamps 42, the clamps 42 used for the fixation of the manifolds 26 are preferably such that they include a holding portion 72 with an inner shape that corresponds to the outer shape of the body 46 of the manifold 26. In other words, the holding portion 72 has an opening that corresponds to the cross-section of the body 46 of the manifold 26 so that the manifold 26 can be easily rotated in the clamp 42 into a desired position before the locking of the manifold 26 by the tightening of the clamp 42.As an alternative to the embodiment illustrated in Figure 5, it is also possible for second openings 38 of the connection unit 11 to be arranged on a side 16 opposite the first hookup side 15, whereby trunk hookups 48 arranged at a 90-degree angle are employed at the ends of the manifolds 26. Pliable seals 23 are preferably used in the first openings 18, as in the embodiment illustrated in Figure 5. The seals 23 can be, for example, of the type disclosed in the patent publication EP 3078891 A2. Thanks to the pliable seals 23, the angle between the first circuit pipes 22 and the inclined portion 34 can deviate from the perpendicular. The angle between the first circuit pipes 22 and the plane T1 can thus be realized by the combined action of the inclined portion 34 and the pliable seals 23.

In the embodiment shown in Figures 1 and 2, the first openings 18 are partly arranged one over the other. The first openings 18 can also be arranged side by side in a same plane, whereby the connection unit 11 can be rendered lower.

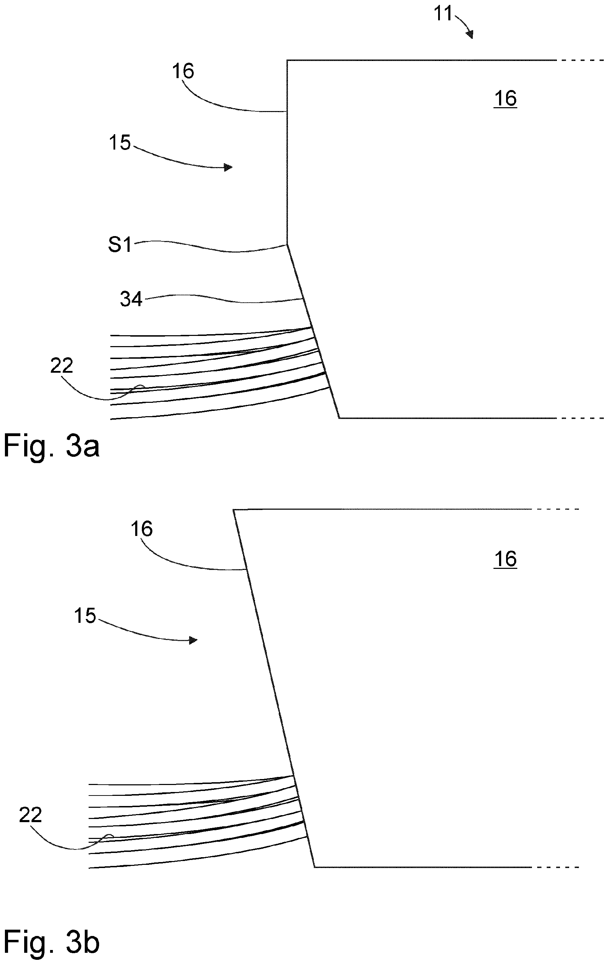

As illustrated in Figure 3a, the first hookup side 15 of the connection unit 11 can have a bevel edge S1, whereby the volume of the connection unit 11 is reduced. Thus, only the inclined portion 34 comprising the first openings 18 of the first hookup side 15 lies at an angle K1 with respect to the plane T1. Alternatively, the entire first hookup side 15 of the connection unit 11 can lie at an angle K1 with respect to the plane T1, as in the embodiment illustrated in Figure 3b.

Figures 4a-4d show various embodiments of a connection unit 15 according to the invention. In Figures 4a and 4b, the base 28 of the connection unit 11 forms a support surface 30, which defines a plane T1. The base 28 is a solid and unbroken structure which forms a fixation surface 70 for the bonding of the connection unit 11 to the insulation 52. In Figure 4c, the housing structure 14 of the connection unit 11 has the shape of a simple polyhedron with an angle of 90 degrees between the base 28 and the first hookup side 15. In this embodiment, brackets 36 of the connection unit 11 act as support means. The ends of the brackets 36 form a support surface 30, and the housing structure 14 is inclined by the support means such that the inclined portion 34 is oriented at a desired angle with respect to the plane T1. In Figure 4d, the angle between the base 28 of the connection unit 11 and the first hookup side 15 is 90 degrees and the inclined portion 34 is arranged at a desired angle with respect to the plane T1 by means of the brackets 36 acting as support means. The housing structure 14 is designed so that the top of the connection unit 11 is parallel to the plane T1.

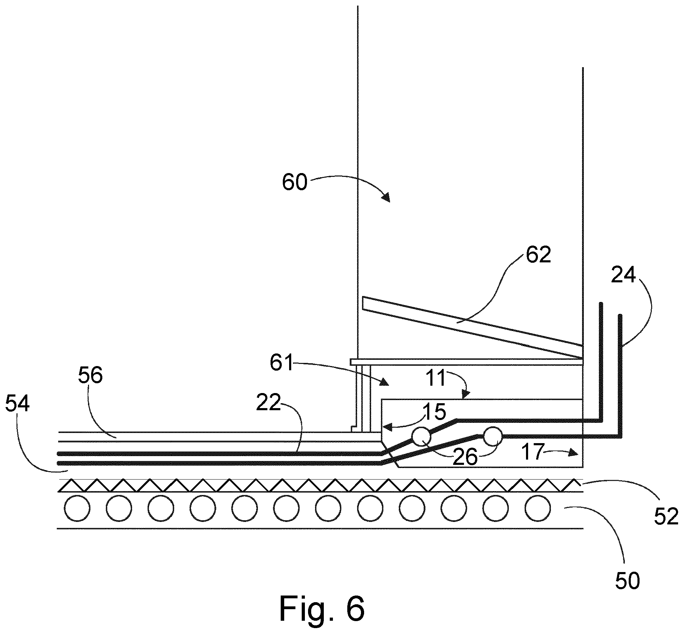

Figure 6 shows a floor structure according to the invention, in which a load-bearing structure 50 - which can be, for example, a hollow-core slab - is lowermost. An insulation 52 is installed on top of the load-bearing structure 50. A connection unit 11 according to any of the embodiments described in the foregoing can be installed on top of the insulation 52 so that the base 28 of the connection unit 11 lies on top of the insulation. Neither the insulation 52 nor the load-bearing structure 50 has been modified for the installation of the connection unit 11. The connection unit 11 can be fixed to the floor structure by bolting or, in order to improve the sound insulation, an adhesive or self-adhesive bond can be used between the connection unit 11 and the insulation 52. The connection unit 11 is used in this floor structure for the installation of floor-heating pipes. The first circuit pipes 22 form a heating loop of the habitation, wherein the first circuit pipes 22 are installed on top of the insulation 52. A floor cast 54 is realized on top of the insulation 52 and the first circuit pipes 22, which floor cast 54 should be at least 12 mm thick over the first circuit pipes. The total thickness of the floor cast 54 can be 20-60 mm. The dried floor cast 54 can be covered with a surface material 56 such as, for example, laminate, vinyl or parquet. By means of the connection unit 11 according to the invention, the first circuit pipes 22 can be installed readily on the surface of the insulation 52, whereby the first circuit pipes 22 are prevented from rising to the surface of the floor cast 54 during casting. The first circuit pipes 22 inside the connection unit 11 are joined via manifolds 26 to second circuit pipes 24 via which a heating liquid enters the habitation. Analogously, the connection unit 11 in this embodiment can join the first circuit pipes 22 to a supply trunk line 40 and to a return trunk line 44 instead of the second circuit pipes 24.

The connection unit 11 can be arranged, for example, in a plinth 61 of a cabinet 60. The connection unit 11 thus does not take up any living space at all in practice. The cabinet 60 can have a base 62 that can be opened so that it is easy to access the connection unit 11 for maintenance work.

## Claims

1. A connection unit (11) for joining circuit pipes conveying liquids, which connection unit (11) includes
- a housing structure (14) with a base (28) and a plurality of sides (16), and at least one side (16), namely a first hookup side (15), has first openings (18) for first circuit pipes (22), and wherein the connection unit (11) comprises support surfaces (30) between which a plane (T1) is formed, wherein the first hookup side (15) includes an inclined portion (34) covering at least a portion of the hookup side (15), which inclined portion (34) lies at an angle (K1) of 45 - 85 degrees, preferably 70 - 80 degrees, with respect to said plane (T1), wherein said first openings (18) are formed in the inclined portion (34),
- at least one manifold (26) for distributing a flow of liquid to the first circuit pipes (22),
- clamps (42) for supporting said manifold (26) inside the housing structure (14),
and the housing structure (14) further includes at least one second opening (38) for conducting a trunk line to the manifold (26),
**characterized in that** the manifold (26) includes a tubular body (46), a trunk hookup (48) formed in the end of the body (46), and circuit hookups (58) formed perpendicularly to the longitudinal direction of the body (46) for the first circuit pipes (22), and the manifold (26) is configured so as to be attachable by its trunk hookup (48) to a trunk line (40), wherein said manifold (26) is fixed in the connection unit (11) by means of clamps (42) so as to be at an incline with respect to the plane (T1) so that said circuit hookups (58) point obliquely with respect to the plane (T1) towards the plane (T1) in order to press said first circuit pipes (22) to be joined to the manifold (26) against the insulation in the cast.

2. The connection unit according to claim 1, **characterized in that**
- the connection unit (11) includes at least two manifolds (26), namely a supply manifold (26.1) for distributing a flow to said first circuit pipes (22) and a return manifold (26.2) for collecting a flow of the first circuit pipes (22) returning from the circuit,
- the housing structure (14) further includes at least two second openings (38) for conducting lines to the manifolds (26), and
- the second openings (38) in the connection unit (11) are configured to conduct a supply trunk line (40) to the supply manifold (26.1) and a return trunk line (44) to the return manifold (26.2), and each manifold (26) includes a tubular body (46), a trunk hookup (48) formed in the end of the body (46), and circuit hookups (58) formed perpendicularly to the longitudinal direction of the body (46) for the first circuit pipes (22), wherein the supply manifold (26.1) is configured to be attachable by its trunk hookup (48) to the supply trunk line (40) and the return manifold (26.2) is configured to be attachable by its trunk hookup (48) to the return trunk line (44), wherein said manifolds (26) are fixed in the connection unit (11) by means of clamps (42) so as to be at an incline with respect to the plane (T1) so that said circuit hookups (58) point obliquely with respect to the plane (T1) towards the plane (T1) in order to press said first circuit pipes (22) to be joined to the manifolds (26) against the insulation in the cast.

3. The connection unit (11) according to claim 1 or 2, **characterized in that** the diameter of the first circuit pipes (22) is smaller than the diameter of a trunk line.

4. The connection unit (11) according to any of claims 1-3, **characterized in that** said second opening (38) is on a side (16) adjacent to said first hookup side (15).

5. The connection unit (11) according to any of claims 1-4, **characterized in that** the base (28) is a solid and unbroken structure which forms a fixation surface (70) for bonding the connection unit (11) to the insulation (52).

6. The connection unit (11) according to any of claims 1-5, **characterized in that** the connection unit (11) has circular first openings (18) for conducting the first circuit pipes (22) perpendicularly to the inclined portion (34) of the first hookup side (15).

7. The connection unit (11) according to any of claims 1 - 6, **characterized in that** said clamps (42) are fixed to the base (28) of the housing structure (14).

8. The connection unit (11) according to any of claims 1 - 7, **characterized in that** the body (46) of the manifold (26) has a circular cross-section and the clamps (42) include a holding portion (72) with a corresponding inner shape, thus allowing the manifold (26) to be rotated about the longitudinal axis of the body (46) in order to orient the circuit hookups (58) .

9. The connection unit (11) according to any of claims 1- 8, **characterized in that** said first hookup side (15) has a bevel edge.

10. The connection unit (11) according to any of claims 1 - 9, **characterized in that** the base (28) and sides (16) of the housing structure (14) form a watertight trough in which a water leakage conduit (32) is arranged above the floor surface.

11. A floor structure comprising
- a load-bearing structure (50),
- an insulation (52) installed on top of the load-bearing structure (50),
- a floor cast (54) realized on top of the insulation (52) with first circuit pipes (22) cast therein, the first circuit pipes (22) including ends for hookups,
- a connection unit (11) for joining the first circuit pipes (22) to a manifold (26) for the conveyance of a liquid, wherein the ends of said first circuit pipes (22) are conducted into the connection unit (11),
**characterized in that** a connection unit (11) according to any of claims 1 - 10 is arranged on top of the insulation (52) and is of a height such that it protrudes at least partly above the cast floor structure.

12. The floor structure according to claim 11, **characterized in that** the floor structure includes an adhesive or self-adhesive bond or a fixation stud between the insulation (52) and the connection unit (11) in order to improve a sound insulation for steps.

13. The floor structure according to any of claims 11 - 13, **characterized in that** the thickness of the floor cast (54) is 20 - 60 mm.

14. A method for installing a connection unit (11) in a floor structure, said connection unit (11) being formed by
- a housing structure (14) with a base (28) and a plurality of sides (16), and on at least one side (16), namely a first hookup side (15), first openings (18) for first circuit pipes (22) are formed, and support surfaces (30) are formed in the connection unit (11) between which a plane (T1) is formed, wherein the first hookup side (15) includes an inclined portion (34) covering at least a portion of the hookup side (15), which inclined portion (34) lies at an angle (K1) of 45 - 85 degrees, preferably 70 - 80 degrees, with respect to said plane (T1), in which inclined portion (34) said first openings (18) are formed,
- at least one manifold (26) for distributing a flow of liquid to the first circuit pipes (22),
- clamps (42) for supporting said manifold (26) inside the housing structure (14),
and at least one second opening (38) is further formed in the housing structure (14) for conducting a trunk line to the manifold (26), and in which method the connection unit (11) is installed on top of a load-bearing structure (50) prior to the casting of the floor, the connection unit (11) is fixed to the load-bearing structure (50), the first circuit pipes (22) are conducted so as to lie on top of the insulation (52), a 20-60 mm thick floor cast (54) is cast on top of the insulation (52), whereby the first circuit pipes (22) remain in the floor cast (54), and the first circuit pipes (22) are joined to the manifold (26) for the conveyance of a liquid, **characterized in that** a tubular body (46) is formed in the manifold (26), a trunk hookup (48) is formed in an end of the body (46), and, perpendicularly to the longitudinal direction of the body (46), circuit hookups (58) are formed for the first circuit pipes (22), and the manifold (26) is joined by its trunk hookup (48) to the trunk line, wherein said manifolds (26) are fixed in the connection unit (11) by means of clamps (42) so as to be at an incline with respect to a plane (T1) so that said circuit hookups (58) point obliquely with respect to the plane (T1) towards the plane (T1) in order to press said first circuit pipes (22) to be joined to the manifolds (26) against the insulation (52) in the cast, and the connection unit (11) is installed on top of the insulation (52), preferably without modifying the insulation (52) or the load-bearing structure (50), and said first circuit pipes (22) are oriented in the floor cast (54) against the insulation (52) by means of the manifold (26).

15. The method according to claim 14, **characterized in that** said connection unit (11) is fixed directly to the insulation (52) by gluing or by self-adhesive means or by fixation studs without breaking the insulation (52) in order to improve the sound insulation with respect to steps.
